## Europäisches Patentamt
## European Patent Office
## Office européen des brevets

(19)

(11) Numéro de publication: **0 277 049 B1**

(12)

# FASCICULE DE BREVET EUROPEEN

(45) Date de publication du fascicule du brevet:
27.12.89

(51) Int. Cl.⁴: **F16D 27/00**, F16D 27/16, F16D 13/75

(21) Numéro de dépôt: **88400026.6**

(22) Date de dépôt: **07.01.88**

(54) Procédé de commande d'embrayage à actionnement motorisé.

(30) Priorité: **09.01.87 FR 8700141**

(43) Date de publication de la demande:
**03.08.88 Bulletin 88/31**

(45) Mention de la délivrance du brevet:
**27.12.89 Bulletin 89/52**

(84) Etats contractants désignés:
**DE IT**

(56) Documents cités:
**FR-A- 2 523 743**
**FR-A- 2 540 647**
**FR-A- 2 559 106**
**GB-A- 856 060**
**GB-A- 2 124 321**

(73) Titulaire: **VALEO, 64 Avenue de la Grande Armée,
F-75017 Paris(FR)**

(72) Inventeur: **Grunberg, Pierre, 10, Villa de Cronstadt,
F-75019 Paris(FR)**
Inventeur: **Mouza, Jean-Claude, 30, rue Baudin,
F-92400 Courbevoie(FR)**
Inventeur: **Bertin, Patrice, 20, rue Victor Hugo,
F-95540 Mery-sur-Oise(FR)**

ACTORUM AG

## Description

L'invention se rapporte à un procédé de commande d'un embrayage à actionnement motorisé et concerne plus particulièrement un perfectionnement permettant d'obtenir une meilleure maîtrise de la course d'actionnement de l'embrayage ainsi que, accessoirement, un contrôle de l'état dudit embrayage tout au long de sa durée de vie.

On connaît un système d'embrayage à actionnement motorisé, pour véhicule automobile, dans lequel la classique pédale de débrayage est supprimée, ainsi que la tringlerie reliant cette pédale à la fourchette de débrayage. Tous ces éléments sont remplacés par un mécanisme comprenant un moteur électrique et un actionneur associé à un compensateur à ressort adapté à modérer ou régulariser le couple que doit exercer le moteur tout au long d'une course d'embrayage ou de débrayage. Ce compensateur à ressort permet donc d'utiliser un moteur électrique de relativement faible puissance. Un tel système d'embrayage est par exemple décrit dans le FR-A 2 523 743 appartenant à la Demanderesse. Par ailleurs, des moyens de commande électriques du moteur ont déjà été décrit dans le FR-A 2 540 647, permettant d'utiliser un moteur électrique à courant continu classique mais commandé en position par une succession d'impulsions électriques. On évite ainsi l'utilisation d'un moteur pas à pas, volumineux et coûteux, tout en gagnant en temps de réponse. Dans un tel contexte, il importe donc de connaître et maîtriser, à n'importe quel moment, la position de l'actionneur (c'est-à-dire la position de la butée d'embrayage le long de l'arbre mené ou, ce qui revient au même, l'angle de rotation de la fourchette accouplée à cette butée ou encore la position du réducteur monté en sortie d'arbre du moteur électrique) tout au long d'une course d'embrayage ou de débrayage et aussi tout au long de la durée de vie de l'embrayage en prenant en compte les changements de caractéristiques mécaniques du système, provoqués par l'usure et/ou la fatigue de certains composants. Une telle connaissance à tout moment de la position de la butée permet un meilleur contrôle de son déplacement; il est alors possible d'en assurer une bonne reproductibilité et d'accroître le confort de conduite du véhicule. L'invention répond à tous ces impératifs.

Dans cet esprit, l'invention concerne donc essentiellement un procédé de commande d'un embrayage à actionnement motorisé, à partir d'un moteur électrique à courant continu alimenté par impulsions, ledit moteur étant couplé à un actionneur, caractérisé en ce qu'il consiste, après avoir défini un certain nombre de déplacements élémentaires pour une course aller et pour une course retour dudit actionneur et affecté à chaque déplacement élémentaire une impulsion de courant d'alimentation dudit moteur de durée prédéterminée,
- à mémoriser dans une mémoire ces durées prédéterminées,
- à lire une séquence de telles durées prédéterminées pour élaborer lesdites impulsions de courant d'alimentation,

- à mesurer la position dudit actionneur après un ou un groupe de déplacements élémentaires précités résultant de l'application d'un nombre correspondant d'impulsions de durées mémorisées correspondantes, et
- à corriger une ou plusieurs durées mémorisées en fonction de l'écart entre une position prescrite et la position mesurée.

Ladite position prescrite est une position calculée que devrait occuper l'actionneur après que le moteur ait reçu ledit nombre correspondant d'impulsions depuis le début d'une course aller ou d'une course retour, respectivement. La série de durées prédéterminées, mémorisée pour une course aller est différente de la série de durées prédéterminées mémorisée pour une course retour et ces deux séries dépendent des caractéristiques et non linéarité respectives du système mécanique. Pour simplifier le système électronique, on peut définir a priori les limites d'un nombre restreint de plages de déplacement successives représentant la totalité d'une course aller ou retour (de trois à huit plages et par exemple quatre plages) et affecter à chaque plage un nombre prédéterminé d'impulsions d'une même durée, cette durée étant spécifique de la plage considérée. Cela revient à faire une approximation linéaire du couple nécessaire au déplacement du dispositif d'embrayage ou par le moteur électrique dans chaque plage considérée. On appelle ici dispositif d'embrayage l'ensemble composé de l'actionneur, du compensateur à ressort et de l'embrayage. Ainsi, si on se fixe à quatre plages, on ne mémorise que quatre paramètres pour une course aller de l'actionneur et quatre paramètres pour une course retour. Les impulsions sont calibrées pour que la plage considérée soit parcourue par l'application d'un nombre constant $n$ de telles impulsions.

La mémorisation de ces deux séries de valeurs, valable pour une course aller et pour une course retour, permet en outre, selon un autre aspect de l'invention, de contrôler l'évolution des caractéristiques mécaniques du système d'embrayage au cours de sa durée de vie. Ainsi, on compare, au cours de ladite durée de vie, les durées d'impulsions mémorisées pour une course aller aux durées d'impulsions mémorisées pour une course retour, pour les différentes plages précitées, respectivement, et on signale un écart absolu ou relatif supérieur à une valeur prédéterminée entre les durées d'impulsions mémorisées comparées deux à deux, comme étant représentatif d'un défaut ou d'un degré d'usure.

L'invention sera mieux comprise et d'autres avantages de celle-ci apparaîtront plus clairement à la lumière de la description qui va suivre, d'un exemple de réalisation d'un ensemble de moyens susceptibles de mettre on oeuvre le procédé défini ci-dessus, faite en référence aux dessins annexés dans lesquels:

- la figure 1 est un schéma-bloc du circuit électronique de commande de l'embrayage à actionnement motorisé, conforme à l'invention;
- la figure 2 est un graphe illustrant la caractéristique Effort-Course du compensateur à ressort par rapport à l'évolution de la caractéristique de l'embrayage lui-mme, en fonction de sa propre usure;

- la figure 3 est un graphe illustrant l'évolution du couple que doit développer le moteur électrique à courant continu au cours d'une double course embrayage-débrayage, lorsque le dispositif d'embrayage est neuf; et

- la figure 4 est un graphe illustrant l'évolution du couple que doit développer le moteur électrique à courant continu au cours d'une double course embrayage-débrayage, lorsque le dispositif d'embrayage est usé.

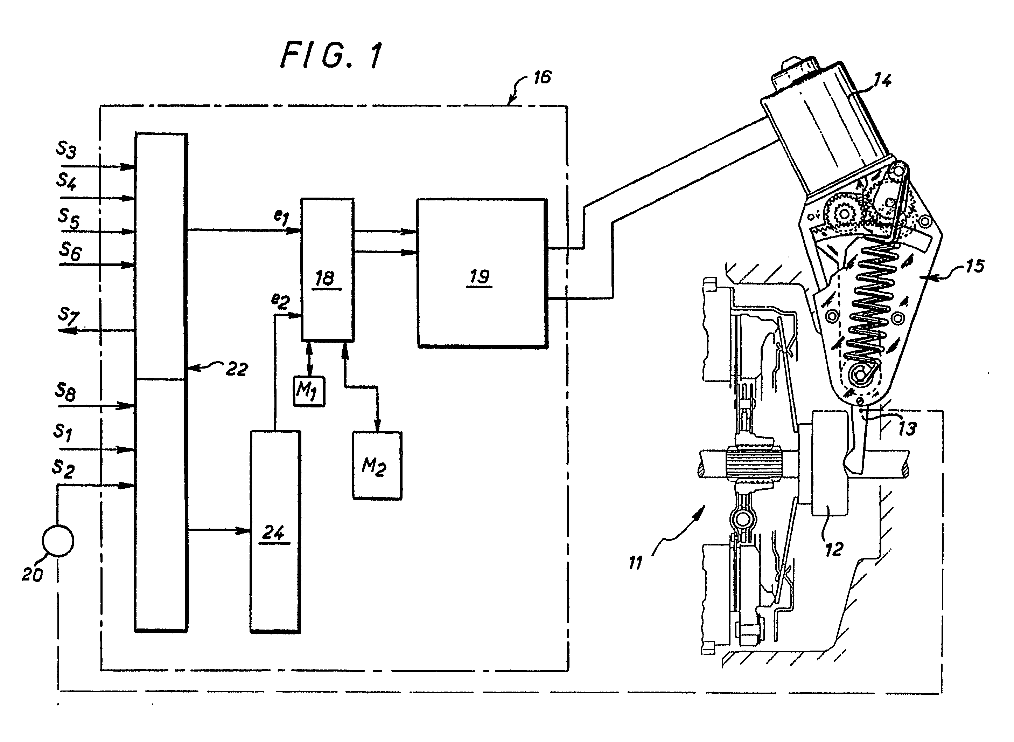

Le schéma-bloc de la figure 1 représente un système de commande d'un embrayage 11, classique, du type à friction, intercalé entre un arbre menant (le vilebrequin du véhicule) et un arbre mené (l'arbre d'entrée d'une boîte de vitesses). L'embrayage est mécaniquement actionné par une butée d'embrayage 12 accouplée à un levier de manoeuvre ou fourchette 13 montée pivotant. Cependant, au lieu d'être classiquement manoeuvrée par une pédale, la fourchette est commandée par un moteur électrique 14 via un actionneur associé à un compensateur à ressort 15. Le moteur 14 est un moteur à courant continu commandé par des impulsions de courant délivrées par un module électronique 16 agencé autour d'un microcalculateur 18. Celui-ci délivre un signal impulsionnel à l'entrée d'un étage de puissance 19 capable d'appliquer des impulsions de courant (dans un sens ou dans l'autre selon que l'on effectue une course de débrayage ou une course d'embrayage) aux enroulements du moteur électrique 14, ces impulsions ayant, une amplitude constante et une durée élaborée par le microcalculateur 18. Ce dernier reçoit sur ses entrées $e_1$ et $e_2$ des signaux représentatifs de paramètres de fonctionnement du véhicule. Parmi ceux-ci, on remarque notamment deux signaux analogiques, l'un $S_1$ représentant la position de la pédale d'accélérateur et l'autre $S_2$ représentant la position de l'actionneur (butée, fourchette ou réducteur) au cours d'une course d'embrayage ou de débrayage. Selon l'exemple, ce singal est prélevé sur le curseur d'un potentiomètre 20 couplé à la fourchette 13 ou au réducteur mécanique lié à l'arbre du moteur 14. Les deux signaux sont adressés au microcalculateur 18 via une interface d'adaptation 22 assurant leur mise en forme et leur protection. Des moyens de conversion analogique-numérique 24 sont, en outre, intercalés entre ladite interface et l'entrée $e_2$. D'autres signaux (impulsionnels, de type tout ou rien) sont adressés au microcalculateur 18 via une autre section de l'interface d'adaptation 22. Il s'agit respectivement de:

$S_3$ : vitesse du moteur

$S_4$ : vitesse de l'arbre d'entrée de la boîte de vitesses

$S_5$ : vitesse de l'arbre de sortie de la boîte de vitesses

$S_6$ : actionnement du levier de changement de vitesses par l'automobiliste.

Un signal d'alarme $S_7$ peut en outre être élaboré par le microcalculateur 18 et adressé à un moyen de signalisation quelconque du véhicule, via l'interface 22. Le microcalculateur 18 élabore les impulsions de commande du moteur à partir des paramètres représentés notamment par les signaux $S_1$-$S_6$ et à partir d'une succession de durées d'impulsions mémorisées dans une mémoire vive $M_1$ qui lui est associée. Une autre mémoire $M_2$, dite non volatile, à écriture-lecture, est reliée au microcalculateur 18. Son rôle est d'emmagasiner toutes les informations contenues dans la mémoire $M_1$ lorsque l'automobiliste coupe le contact. Il peut s'agir, par exemple, d'une mémoire connue sous l'appellation "EEPROM" dans la technique ou d'une mémoire vive alimentée par une liaison directe avec la batterie du véhicule ou par une petite pile intégrée au système.

A titre d'exemple, l'ensemble formé par le microcalculateur 18, la mémoire $M_1$ et les moyens de conversion analogique numérique 24 est obtenu à partir d'un composant tel que le 6805R3 de MOTORO-LA, la mémoire $M_2$ sera une NMC 9306E de NATIONAL SEMICONDUCTOR.

Le fonctionnement est le suivant.

Grâce à un logiciel adapté, qui ne fait pas partie de l'invention, le microcalculateur est susceptible de générer toutes les séquences d'impulsions de commande correspondant aux différentes configurations des manoeuvres d'embrayage et de débrayage. Notamment, les manoeuvres rapides correspondant à des changements de vitesses ou à un démarrage brutal donnent lieu à s'élaboration de trains d'impulsions dont les durées résultent essentiellement de l'analyse du signal $S_2$, c'est-à-dire plus précisément de la comparaison entre la position réelle de l'actionneur et celle qui devrait résulter du nombre d'impulsions déjà appliquées. Si l'actionneur est "en retard" par rapport à sa position prescrite, le microcalculateur 19 commande une augmentation de la durée des impulsions appliquées. Si au contraire, l'actionneur est "en avance", le microcalculateur commande une réduction de la durée de ces impulsions, voire leur élimination pure et simple à certains endroits de la course.

En revanche, parmi toutes les séquences d'impulsions de commande qui correspondent à un grand nombre de situations de conduite différentes, le système mémorise deux groupes de durées prédéterminées qui correspondent à un embrayage et un débrayage à vitesse dite normale (c'est-à-dire ni spécialement rapide ni spécialement lent), autrement dit, une course aller et une course retour de l'actionneur pendant laquelle sa vitesse reste inférieure à une certaine valeur pour laquelle les incréments de déplacement dudit actionneur correspondant aux impulsions, peuvent être distingués. Comme mentionné précédemment, la course de l'actionneur est, dans cet exemple de réalisation, divisée en quatre plages auxquelles on fait correspondre un nombre $n$ prédéterminé d'impulsions de durée constante, la durée étant spécifique de la plage. L'amplitude des impulsions est également maintenue constante. Ainsi, si $n=8$, la course d'embrayage ou de débrayage sera entièrement parcourue par l'application de 32 impulsions successives de seulement quatre durées différentes correspondant aux différentes plages. La mémoire vive $M_1$ n'a ainsi à mémoriser que quatre durées prédéterminées pour une course aller et quatre durées prédéterminées pour une course retour, soit au total, huit valeurs seulement. Selon un mode de réalisation possible, la durée prédéterminée associée à chaque déplacement élémentaire est constante dans chaque plage. Pour des manoeuvres d'embrayage et de débrayage dites lentes, ces valeurs sont simplement lues par le microcalculateur 18 et servent directement à l'élaboration des trains d'impulsions transmis et amplifiés par l'étage de puissance 19.

Selon un aspect important de l'invention, les durées prédéterminées contenues dans la mémoire $M_1$ sont éventuellement corrigées si les positions successives mesurées de l'actionneur (le signal $S_1$) ne correspondent pas aux positions attendues, après chaque impulsion ou après un groupe donné de telles impulsions. Cette réactualisation de la mémoire $M_1$ permet de tenir compte de l'évolution lente du couple vu par le moteur et donc des caractéristiques mécaniques du dispositif d'embrayage, notamment de l'usure de l'embrayage. Par le même agencement, le système peut "s'éduquer" lui-même à la faveur d'un nombre limité de manoeuvres d'embrayage et de débrayage si les durées inscrites dans la mémoire sont relativement éloignées des durées requises pour procurer le déplacement voulu. Il peut en être ainsi en particulier lors de la première mise en service de l'embrayage. Comme mentionné précédemment, lorsque l'utilisateur arrête le véhicule, le microcalculateur commande le transfert de toutes les valeurs inscrites dans la mémoire $M_1$ vers la mémoire $M_2$ non volatile. Ces valeurs servent de références au démarrage suivant.

Lorsque le véhicule doit circuler dans des pays à climat non tempéré et surtout dans le cas des pays à climat très froid, le couple vu par le moteur électrique 14 sera différent du celui vu en région dite tempérée.

On prévoit donc un signal supplémentaire $S_8$ représentatif de la température extérieure au véhicule. lors du démarrage du véhicule le calculateur corrigera les données contenues dans la mémoire non volatile en fonction de ce signal $S_8$ avant de les recopier dans la mémoire $M_1$.

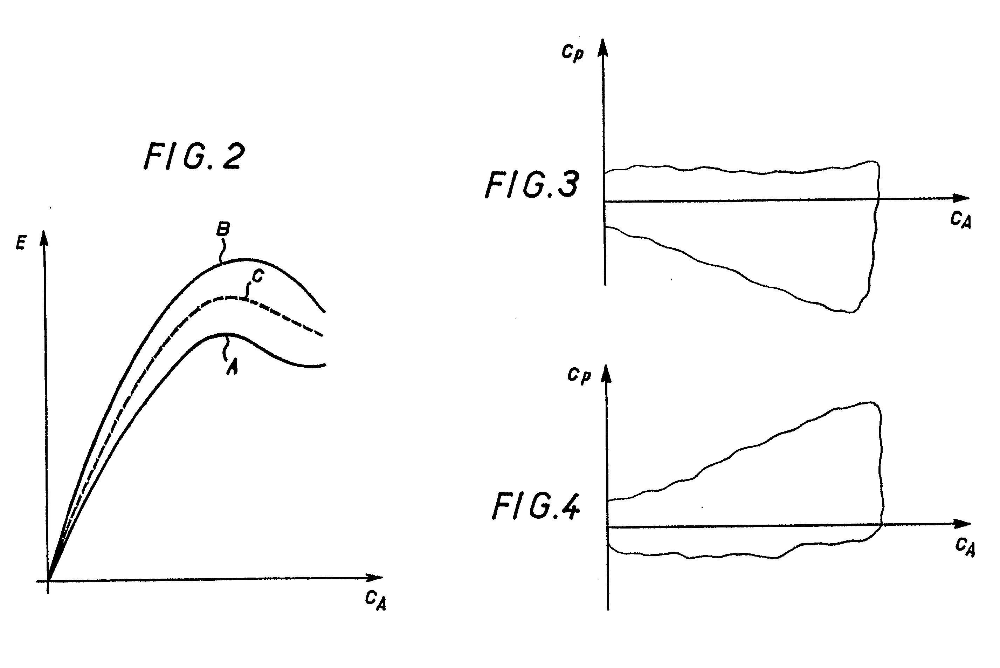

Selon un autre aspect de l'invention, on peut mettre à profit la mémorisation des durées prédéterminées pour signaler à l'utilisateur certaines anomalies ou une usure excessive de l'embrayage. Ainsi, la figure 2 illustre la caractéristique Effort (E) qu'il est nécessaire d'appliquer à l'embrayage au cours de la Course d'actionnement ($C_A$), lorsqu'il est neuf (courbe A) et lorsqu'il est usagé (courbe B). La courbe C montre que la caractéristique du compensateur à ressort associé à l'actionneur est choisie pour compenser approximativement celle d'un embrayage au milieu de sa durée de vie. Dans ces conditions, le couple $C_p$ développé par le moteur électrique 14 tout au long d'une double course d'embrayage et de débrayage est conforme à la figure 3 lorsque l'embrayage est neuf (un couple plus important est nécessaire au réembrayage) et il est conforme à la figure 4 lorsque l'embrayage est complètement usé. On note une inversion de la courbe caractéristique. Ainsi, dans la situation de la figure 3, l'impulsion correspondant à une fraction donnée quelconque de la course de débrayage aura une durée plus courte que l'impulsion correspondant à la même fraction de course au cours de l'embrayage. Inversement, dans la situation de la figure 4, l'impulsion correspondant à une fraction donnée quelconque de la course de débrayage aura une durée plus longue que l'impulsion correspondant à la même fraction de course au cours de l'embrayage. Le microcalculateur est programmé pour comparer périodiquement deux à deux (dans la mémoire $M_1$ ou même dans la mémoire $M_2$, avant le démarrage par exemple) les durées prédéterminées enregistrées pour une même portion de course de l'actionneur, à l'embrayage et au débrayage.

Si l'écart est important et correspond à la siuation de la figure 4 (durée d'impulsion plus longue au débrayage) un moyen de signalisation pourra êtra activé . Plus généralement, un écart trop important entre les durées prédéterminées comparées sera toujours représentatif d'un défaut. Notamment, outre l'usure, un écart trop important dans le même sens pourra signifier une rupture du ressort du compensateur. Un écart trop important dans l'autre sens pourra signifier une rupture du diaphragme de l'embrayage.

## Revendications

1. Procédé de commande d'un embrayage à actionnement motorisé à partir d'un moteur (14) à courant continu alimenté par impulsions, ledit moteur étant couplé à un actionneur (13), caractérisé en ce qu'il consiste, après avoir défini un certain nombre de déplacements élémentaires pour une course aller et pour une course retour dudit actionneur et affecté à chaque déplacement élémentaire une impulsion de courant d'alimentation dudit moteur, de durée prédéterminée,
   – à mémoriser dans une mémoire ($M_1$) ces durées prédéterminées,
   – à lire une séquence de telles durées prédéterminées pour élaborer lesdites impulsions de courant d'alimentation,
   – à mesurer (20) la position dudit actionneur après un ou un groupe de déplacements élémentaires précités résultant de l'application d'un nombre correspondant d'impulsions de durées mémorisées correspondantes, et
   – à corriger une ou plusieurs durées mémorisées en fonction de l'écart entre une position prescrite et la position mesurée dudit actionneur.

2. Procédé de commande selon la revendication 1, caractérisé en ce que l'on partage la course aller et al course retour dudit actionneur en un nombre défini de plages et chacune de ces plages en un nombre de déplacements élémentaires.

3. Procédé selon la revendication 2, caractérisé en ce que le nombre de plages est choisi entre 2 et 8.

4. Procédé selon la revendication 3, caractérisé en ce que le nombre de plages est égal à 4.

5. Procédé selon l'une des revendications 2 à 4, caractérisé en ce que la course aller est partagée en autant de plages que la course retour.

6. Procédé selon l'une des revendications 2 à 5, caractérisé en ce que le nombre de déplacements élémentaires est le même dans toutes les plages.

7. Procédé selon l'une des revendications 1 à 6, caractérisé en ce que la durée prédéterminée associée à chaque déplacement élémentaire est constante dans chaque plage.

8. Procédé de commande selon l'une des revendications précédentes, caractérisé en ce que l'on autorise les corrections de l'ensemble des durées mémorisées ($M_1$ ou $M_2$) valables pour une course aller ou une course retour lorsque la vitesse dudit actionneur reste inférieure à une valeur choisie pour laquelle les incréments de déplacement correspondant auxdites impulsions peuvent être distingués.

9. Procédé de commande selon l'une des revendications précédentes, caractérisé en ce que l'on compare, au cours de la durée de vie de l'embrayage, les durées d'impulsions mémorisées ($M_1$ ou $M_2$) pour une course aller aux durées d'impulsions mémorisées pour une course retour, respectivement pour des incréments de déplacement correspondants et en ce que l'on signale un écart supérieur à une valeur prédéterminée entre lesdites durées d'impulsions mémorisées comparées deux à deux, comme représentatif d'un défaut ou d'un degré d'usure.

10. Procédé selon l'une des revendications précédentes, caractérisé en ce que le contenu d'une première mémoire ($M_1$) est recopié dans une seconde mémoire ($M_2$), non volatile, lorsque l'on coupe le contact du véhicule et est de nouveau copié dans ladite première mémoire ($M_1$) à la remise du contact.

## Claims

1. A control procedure for a motorised clutch operated by a direct current motor (14) supplied with pulsed control signals, the said motor being coupled to an actuating member (13), characterised in that the procedure comprises, after defining a known number of elementary displacements for a forward stroke and for a return stroke of the said actuating member, and after causing the said motor to receive a pulse of supply current of predetermined duration at each elementary displacement:
   – memorising these predetermined durations in a memory ($M_1$),
   – reading a sequence of such predetermined durations so as to determine the said pulses of supply current,
   – measuring (20) the position of the said actuating member after one or a group of said elementary displacements resulting from the application of a corresponding number of pulses of corresponding memorised displacements, and
   – correcting one or more memorised displacements as a function of the distance between a prescribed position and the measured position of the said actuating member.

2. A control procedure according to Claim 1, characterised in that the forward stroke and the return stroke of the said actuating member are divided into a defined number of ranges, and each of the said ranges is divided into a number of elementary displacements.

3. A procedure according to Claim 2, characterised in that the number of ranges is chosen between 2 and 8.

4. A procedure according to Claim 3, characterised in that the number of ranges is equal to 4.

5. A procedure according to one of Claims 2 to 4, characterised in that the forward stroke is divided into the same number of ranges as the return stroke.

6. A procedure according to one of Claims 2 to 5, characterised in that the number of elementary displacements is the same in all the ranges.

7. A procedure according to one of Claims 1 to 6, characterised in that the predetermined duration associated with each elementary displacement is constant in each range.

8. A control procedure according to one of the preceding Claims, characterised in that corrections are carried out on the totality of the memorised durations ($M_1$ or $M_2$) valid for a forward stroke or a return stroke, when the velocity of the said actuating member remains smaller than a selected value for which the increments in displacement corresponding to the said pulses are able to be distinguished.

9. A control procedure according to one of the preceding Claims, characterised in that, in the course of the working life of the clutch, the durations of pulses ($M_1$ or $M_2$) memorised for a forward stroke are compared with the durations of the pulses memorised for a return stroke, respectively for corresponding increments in displacements, and in that an interval greater than a predetermined value, between the said memorised pulsed durations when compared two by two, is signalled as representing a fault or a degree of wear.

10. A procedure according to one of the preceding Claims, characterised in that the content of a first memory ($M_1$) is copied into a second memory ($M_2$), being a read-only memory, when the vehicle transmission is disengaged, and is once again copied into the said first memory ($M_1$) when the transmission is re-engaged.

## Patentansprüche

1. Verfahren zur Steuerung einer motorgetriebenen Kupplung mittels eines impulsgespeisten Gleichstrommotors (14), der mit einer Betätigungsvorrichtung (13) gekoppelt ist, dadurch gekennzeichnet, daß zunächst eine bestimmte Anzahl von Grundbewegungen für einen Vorwärts- und einen Rückwärtshub der genannten Betätigungsvorrichtung ausgeführt werden und jeder Grundbewegung ein Speisestromimpuls des genannten Motors von festgelegter Dauer zugeordnet ist und dann
   – diese festgelegten Zeiträume in einem Speicher (M1) gespeichert werden,
   – eine Folge solcher festgelegter Zeiträume gelesen wird, um die genannten Speisestromimpulse zu verarbeiten,
   – die Position der genannten Betätigungsvorrichtung nach einer oder mehrerer der vorgenannten Grundbewegungen aufgrund der Anwendung einer entsprechenden Anzahl Impulse mit entsprechend gespeicherter Dauer gemessen wird (20) und

– einer oder mehrere der gespeicherten Zeiträume entsprechend dem Abstand zwischen einer vorgeschriebenen Position und der gemessenen Position der genannten Betätigungsvorrichtung korrigiert werden.

2. Steuerungsverfahren nach Anspruch 1, dadurch gekennzeichnet, daß der Vorwärts- und Rückwärtshub der genannten Betätigungsvorrichtung in eine bestimmte Anzahl von Bereichen und jeder dieser Bereiche in eine Anzahl von Grundbewegungen unterteilt ist.

3. Verfahren nach Anspruch 2, dadurch gekennzeichnet, daß die Anzahl der Bereiche zwischen 2 und 8 gewählt wird.

4. Verfahren nach Anspruch 3, dadurch gekennzeichnet, daß die Anzahl der Bereiche gleich 4 ist.

5. Verfahren nach einem der Ansprüche 2 bis 4, dadurch gekennzeichnet, daß der Vorwärtshub in ebenso viele Bereiche unterteilt ist wie der Rückwärtshub.

6. Verfahren nach einem der Ansprüche 2 bis 5, dadurch gekennzeichnet, daß die Anzahl der Grundbewegungen für sämtliche Bereiche gleich ist.

7. Verfahren nach einem der Ansprüche 1 bis 6, dadurch gekennzeichnet, daß die mit jeder Grundbewegung einhergehende festgelegte Zeitdauer für jeden einzelnen Bereich konstant ist.

8. Steuerungsverfahren nach einem der vorherigen Ansprüche, dadurch gekennzeichnet, daß die Korrekturen sämtlicher gespeicherter Zeiträume (M1 oder M2), die für einen Vorwärts- oder einen Rückwärtshub gelten, zugelassen werden, wenn die Geschwindigkeit der genannten Betätigungsvorrichtung unterhalb eines gewählten Wertes bleibt, für welchen die den genannten Impulsen entsprechenden Bewegungsinkremente unterschieden werden können.

9. Steuerungsverfahren nach einem der vorherigen Ansprüche, dadurch gekennzeichnet, daß während der Lebensdauer der Kupplung die gespeicherten Impulszeiträume (M1 oder M2) für einen Vorwärtshub mit den gespeicherten Impulszeiträumen für einen Rückwärtshub bzw. für entsprechende Bewegungsinkremente verglichen werden und daß ein Abstand signalisiert wird, der über einem bestimmten Wert zwischen den genannten gespeicherten Impulszeiträumen liegt, die miteinander verglichen wurden, und der einen Fehler oder einen bestimmten Grad der Abnutzung anzeigt.

10. Verfahren nach einem der vorherigen Ansprüche, dadurch gekennzeichnet, daß der Inhalt eines ersten Speichers (M1) in einen zweiten, nichtflüchtigen Speicher (M2) umkopiert wird, wenn der Fahrzeugkontakt unterbrochen wird, und daß er bei Wiederherstellung des Kontakts wieder in den genannten ersten Speicher (M1) kopiert wird.

FIG. 1

# FIG. 2

# FIG.3

# FIG.4

EP 0 277 049 B1